(19) Europäisches Patentamt
European Patent Office
Office européen des brevets

(11) Veröffentlichungsnummer: **0 193 827**
**B1**

(12) # EUROPÄISCHE PATENTSCHRIFT

(45) Veröffentlichungstag der Patentschrift: **12.10.88**

(51) Int. Cl.⁴: **C 08 G 75/02**, C 08 L 81/02

(21) Anmeldenummer: **86102370.3**

(22) Anmeldetag: **24.02.86**

(54) **Verfahren zur Herstellung von hochmolekularen Polyarylensulfiden.**

(30) Priorität: **06.03.85 DE 3507827**

(43) Veröffentlichungstag der Anmeldung: **10.09.86 Patentblatt 86/37**

(45) Bekanntmachung des Hinweises auf die Patenterteilung: **12.10.88 Patentblatt 88/41**

(84) Benannte Vertragsstaaten: **BE DE FR GB IT**

(56) Entgegenhaltungen:
**US-A-3 699 087**
**US-A-4 046 749**

**PATENTS ABSTRACTS OF JAPAN, Band 6, Nr. 57 (C-98) 935 , 14. April 1982; & JP - A - 57 165 (SEKISUI KAGAKU KOGYO K.K.) 05.01.1982**

(73) Patentinhaber: **BAYER AG, Konzernverwaltung RP Patentabteilung, D-5090 Leverkusen 1 Bayerwerk (DE)**

(72) Erfinder: **Ostlinning, Edgar, Dr., Rembrandtstrasse 37, D-4000 Düsseldorf (DE)**
Erfinder: **Fritsch, Karl- Herbert, Dr., Hackberg 25, D-5060 Bergisch- Gladbach 1 (DE)**

EP 0 193 827 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Herstellung von hochmolekularen Polyarylensulfiden aus niedermolekularen Polyarylensulfiden durch Umsetzung mit elementarem Schwefel.

Polyarylensulfide und ihre Herstellung sind bekannt (z. B. US-PS-2 513 188, 3 117 620, 3 354 129, 3 524 835, 3 790 536, 3 839 301, 4 048 259, 4 038 260, 40 388 261, 40 38 262, 40 56 515, 40 60 520, 40 63 114, 41 16 947, 42 82 347, DE-AS-2 453 485, 2 453 749, DE-OS-2 623 362, 2 623 363, 2 633 333, 2 930 797, 2 930 710, 3 019 732, 3 030 488, 3 215 259, 3 243 189, 3 241 514).

Weiterhin ist bekannt, Polyarylensulfide mit niedrigem Molekulargewicht, die sich nur beschränkt verarbeiten lassen, in einem sogenannten Curingschritt zu hochmolekularen Produkten aufzubauen (z. B. US-PS-3 562 199, 3 717 620, 3 737 411, 3 793 256, 4 321 358, 4 370 471, 4 383 080).

Bei diesen Verfahren werden für den Curingschritt z. B. Sauerstoff, Ozon oder Chinone usw. verwendet.

Weiterhin ist bekannt beim Curing andere Zusätze z. B. Metalle (s. US-PS-3 451 873), Schwefelsäure und Polysulfonsäuren bzw. deren Halogenide zu verwenden (s. z. B. US-PS-3 839 301).

Weiterhin ist Schwefel als Agenz zum Aufbau von hochmolekularen Polyarylensulfiden bekannt (s. beispielsweise US-PS-3 699 087, 3 725 362, JP-PS-165 vom 05.01.1982). Jedoch benötigt man, um einen produktverbessernden Effekt zu erzielen, entweder ein Metalloxid als Hilfszusatz (ZnO, $ZrO_2$) oder S in großen Mengen (10 Gew.-%). Weiterhin ist aus der US-A-4 046 749 bekannt PAS-Oligemere unter Zusatz von 15 Gew.-% Schwefel einer Curing Behandlung zu unterziehen.

Es wurde nun gefunden, daß hochmolekulare Polyarylensulfide in einer Zweiten Stufe durch Härtung mit wenig elementarem Schwefel aus niedermolakularen Polyarylensulfiden, die in einer ersten Stufe erhalten wurden, hergestellt werden können, wenn diese Polyarylensulfide auf geeignete Art mit Schwefel versetzt werden und die Umsetzung mit Schwefel in der Schmelze erfolgt.

Gegenstand der Erfindung ist somit ein Zweistufiges Verfahren zur Herstellung von hoohmolekularen Polyarylsulfiden aus niedermolekularen, gegebenenfalls verzweigten Polyarylensulfiden, die in einer ersten Stufe aus.

a. 50 - 100 Mol-% Dihalogenaromaten der Formel

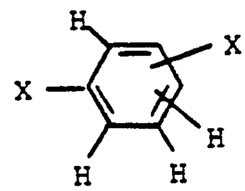

(I)

und 0 - 50 Mol-% Dihalogenaromaten der Formel

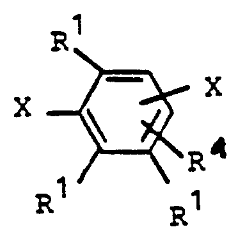

(II),

in denen

X für zueinander meta- oder para-ständiges Halogen wie Chlor oder Brom steht und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$- Alkylaryl oder $C_7$-$C_{24}$-Aralkyl bedentet und weiterhin zwei zueinander orthoständige Reste $R^1$ einen ankondensierten aromatischen Ring mit insgesamt 6 C-Atomen oder einen ankondensierten heterocyclischen Ring mit 5 - 6 Ringatomen und 1 - 3 Heteroatomen wie N, O und S bilden können,

b. 0 - 0,5 Mol-%, bevorzugt 0,0 - 0,1 Mol-%, bezogen auf die Summe der Dihalogenaromaten der Formel I und II, eines Tri- oder Tetrahalogenaromaten der Formel

$ArX_n$, (III),

wobei

Ar ein aromatischer oder heterocyclischer Rest ist,

X für Halogen wie Chlor oder Brom steht und

n für die Zahl 3 oder 4 steht, und

c. Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium-, und

Kaliumhydroxid, wobei das molare Verhältnis von (a + b) : c im Bereich von 0,75 : 1 bis 1,05 : 1, bevorzugt 0,9 - 1 bis 1 : 1, liegen kann, in

d. einem organischen Lösungsmittel, gegebenenfalls unter Zusatz von

e. 0.02 - 1 Mol Katalysatoren oder Cosolventien hergestellt werden und eine Schmelzviskosität von 0.1 bis 50 Pa:s haben

und

in einer zweiten Stufe

f. mit elementarem Schwefel in Mengen von 0,1 - 1,5 Gew -% bevorzugt 0,15 - 1,05 Gew.-%, bezogen auf Polyarylensulfid umgesetzt werden wobei die Umsetzung in der Schmelze bei Temperaturen von 300 bis 390°C, bevorzugt von 340 - 370°C, erfolgt.

Die Herstellung der Polyarylensulfide kann nach prinzipiell bekannten Verfahren erfolgen.

Als Katalysatoren können für diesen Zweck übliche Substanzen in üblichen Mengen eingesetzt werden, beispielsweise Alkalifluoride, Alkaliphosphate und ALkalicarboxylate. Es werden pro Mol Alkalisulfid 0,02 - 1,0 Mol Katalysator eingesetzt.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 - 1,0 Mol, bezogen auf 1 Mol Alkalisulfid, eingesetzt werden.

$R^1$ steht in Formel II vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin können zwei zueinander orthoständige Reste $R^1$ einen ankondensierten aromatischen Ring mit insgesamt 6 C-Atomen oder einen ankondensierten heterocyclischen Ring mit 5 - 6 Ringatomen und 1 - 3 Heteroatomen wie N, O und S bilden.

Ar steht vorzugsweise für einen aromatischen Rest mit 6 - 24 C-Atomen oder heterocyclischen Rest mit 6 - 24 Ringatomen, besonders bevorzugt für einen aromatischen Rest mit 6 - 10 C-Atomen oder heterocyclischen Rest bis zu 3 Heteroatome wie N, S, O enthalten können.

Alkalisulfide können in üblichen Mengen und in üblicher Weise eingesetzt werden. z. B. sind Lithium-, Natrium-und Kaliumsulfid geeignet, vorzugsweise Natrium- und Kaliumsulfid. Es können Akalisulfide eingesetzt werden, die aus Hydrogensulfiden mit Alkalihydroxiden wie LiOH, NaOH und KOH regeneriert werden. In jedem Fall können Mischungen sowohl der Sulfide als auch der Hydroxide eingesetzt werden.

Es können meta- und para-Dihalogenaromaten der Formel (I) bzw. (II) eingesetzt werden. In diesem Fall kann das Verhältnis meta- zu para-Dihalogenaromaten bis zu 30 : 70 betragen.

Das Verfahren kann bei einem leichten Überdruck bis zu 15 bar ausgeführt werden.

Beispiele für erfindungsgemäß geeignete Dihalogenaromaten der Formel (I) sind: p-Dibrombenzol, 1-Chlor-4-brombenzol, 1,3-Dichlorbenzol, 1,3-Dibrombenzol, 1-Chlor-3-brombenzol, 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für geeignete Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol, 1-Cyclohexyl-3,5-dichlorbenzol. Sie sind allein oder im Gemisch miteinander einsetzbar.

Beispiele für geeignete Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Geeignete organische Lösungemittel sind z. B. Alkyllactame, beispielsweise N-Methyl-pyrrolidon, N-Ethylpyrrolidon, N-Isopropyl-pyrrolidon, N-Methyl-piperidon, N-Methylcaprolactam, N,N'-Dimethyl-piperazinon oder andere polare organische Lösungsmittel wie 1-Methyl-1-oxo-phospholan. Die Reaktionspartner sollten sich zumindest teilweise in ihnen lösen. Der Siedepunkt der Lösungsmittel liegt im allgemeinen über 200°C.

Die Reaktionszeit kann bis zu 24 Stunden betragen, vorzugsweise von 2 bis 18 Stunden.

Die Umsetzung wird im allgemeinen bei Atmosphärendruck durchgeführt. Eine Anwendung von Überdruck von 0,1 bar bis 15 bar kann in besonderen Fällen von Vorteil sein.

Bei der Durchführung der Polyarylensulfid-Herstellung können alle Komponenten der Umsetzung in beliebiger Reihenfolge auf einmal zusammengegeben werden. Dann kann z. B. die Umsetzungsmischung auf eine Temperatur von 160 - 270°C vorzugsweise 170 - 250°C, erhitzt werden. Die Umsetzung kann so als Eintopfreaktion durchgeführt werden. Während des Aufheizens der Umsetzungsmischung und während der Dauer der Umsetzung kann das aus der Mischung mit dem Halogenaromaten azeotrop abdestillierende Waser, beispielsweise über einen Wasserabscheider, abgetrennt werden. Während der gesamten Dauer der Umsetzung kann auf diese Weise eventuell noch vorhandenes Wasser abgetrennt werden.

Es ist ebenfalls möglich, die Komponenten der Umsetzung nacheinander einer Entwässerung zu unterziehen oder während der Entwässerungsphase kontinuierlich zuzudosieren.

Die Aufarbeitung des Umsetzungsgemisches und die Isolierung der Polyarylensulfide können in bekannter Weise erfolgen.

Das Polyarylensulfid kann direkt aus der Umsetzungslösung oder erst z. B. nach Zugabe von Wasser und/oder verdünnten Säuren nach üblichen Verfahrensweisen abgetrennt werden, beispielsweise durch

Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden. Die Polyarylensulfide können SH-Gruppen enthalten.

Die so gewonnenen Polyarylensulfide werden anschließend mit elementarem Schwefel versetzt. Hierzu können die Polyarylensulfide mit der gewünschten Menge S trocken in einem Mischer versetzt werden. Es ist auch möglich, den Schwefel als Lösung in S-lösenden Lösungsmitteln einzubringen und das Lösungsmittel im Anschluß abzudestillieren. Weiterhin kann der Schwefel z. B. in Suspension in geeigneten Lösungsmitteln gebracht werden, wobei gegebenenfalls frisch gefällter oder kolloider Schwefel verwendet werden kann.

Ebenso ist es möglich, den Schwefel auf das Polyarylensulfid aufzusublimieren.

Eine weitere Möglichkeit besteht darin, den Schwefel auf eine der vorgenannten Weisen in schon geschmolzenes Polyarylensulfid einzutragen.

Erfindungsgemäß geeignet sind alle handelsüblichen Formen elementaren Schwefels, z. B. Schmelzen oder Pulver in den Modifikationen des α-, β- oder λ-Schwefels. Besonders geeignet sind reine bzw. hochreine Schwefelqualitäten.

Ganz besonders geeignet ist durch zweimalige Sublimation gereinigter Schwefel in Form von Schwefelblüte.

Als Lösungsmittel für Schwefel, die Verwendung bei der Herstellung von Mischungen aus Polyarylensulfiden und Schwefel finden können, seinen beispielsweise Aceton, Schwefelkohlenstoff oder Toluol u.s.w. erwähnt.

Die im Anschluß an die Herstellung der Mischungen aus Polyarylensulfiden und Schwefel wobei der Schwefel besonders fein verteilt aufgebracht ist, folgende Umsetzung erfolgt bei Temperaturen von 300 - 390°C, bevorzugt 340 - 370°C. Sie kann bis zu mehreren Stunden dauern, vorzugsweise 0,05 bis 12 Stunden. Sie kann vorteilhaft unter Durchmischung unter einer Intergasatmosphäre (z. B. $N_2$, $CO_2$, Ar, usw.) erfolgen.

Zur besseren Durchmischung können sowohl einfache Rührapparaturen als auch Kneter oder Schneckenmaschinen benutzt werden.

Im allgemeinen wird das Schmelzfließverhalten von Polyarylensulfiden nach ASTM 1238 - 79 bei 316°C unter Verwendung eine 5-kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität nm der Polymerschmelze (in Pa.s) bei 306°C in Abhängigkeit von der Schubspannung (in Pa.s) mit Hilfe des Instron-Rotationsviskosimeters bestimmt.

Man kann auf diese Weise die Schmelzviskosität in einem sehr weiten Bereich von $10^{-1}$ bis $10^7$ bestimmen. In dem Instrom-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abängigkeit von der Schubspannung errechnet werden. Verwendet wurde das Rheometer Modell 32500 der Firma Instron; Durchmesser des Kegels und der Platte 2 cm.

Angegeben wird die Schmelzviskosität, die bei einer Schubspannung von $\tau = 10^2$ Pa gemessen wird.

Die Polyarylensulfide können direkt nach der Isolierung aus dem Reaktionsgemisch im allgemeinen Schmelzviskositäten von 0,1 bis 50 Pa.s, vorzugsweise 0,15 bis 20 Pa.s besitzen. Nach der Umsetzung mit Schwefel besitzen die erfindungsgemäßen Polyarylensulfide Schmelzviskositäten von 400 bis 100 000 Pa.s, bevorzug 1000 bis 50 000 Pa.s. Sie können direkt durch Extrusion, Extrusionsblasen, Spritzgießen oder sonst übliche Verarbeitungstechniken zu Folien, Formkörpern oder Fasern verarbeitet werden. Besonders gut sind diese Polyarylensulfide zur Beschichtung von Formkörpern geeignet.

Diese können in üblicher Weise Verwendung finden, z. B. als Automobilteile, Armaturen, Elektroteile, z. B. Schalter, elektronische Tafeln, chemikalienresistente und verwitterungsstabile Teile und Apparate wie Pumpengehäuse und Pumpenflügelräder, Ätzbadschalen, Dichtingsringe, Teile von Büromaschinen und Fernmeldeeinrichtungen sowie Haushaltsgeräte, Ventile, Kugellagerteile u.s.w.

**Beispiel 1**

Herstellung von Polyphenylensulfid gemäß von US-PS-3 354 129

In einem mit Rührer ausgerüsteten Autoklaven wurden 129 g Natriumsulfidhydrat (≙ 1 Mol $Na_2S$) und 300 g N-Methylpyrrolidon zusammengegeben. Das Gemisch wurde mit Stickstoff gespült und langsam bis auf 202°C erwärmt. Dabei destillieren insgesamt 19 ml Wasser ab (das entspricht einem Restwassergehalt von 1,78 Mol, bezogen auf Natriumsulfid). Der Ansatz wurde anschließend auf ca. 160°C abgekühlt und 147 g p-Dichlorbenzol (≙ 1 Mol) in ca. 50 g Methylpyrrolidon hinzugefügt. Man erwärmt das Reaktionsgemisch unter einem Stickstoffvordruck von 2,5 bar in 30 min auf 245°C und hält diese Temperatur 3 Stunden. Dabei wird ein Enddruck von 14,5 bar erreicht. Nach Abkühlen auf Raumtemperatur wird ein grauer Feststoff isoliert, der anschließend mit Wasser gewaschen wird. Man trocknet bei 80°C im Vakuum und erhält 100,3 g (≙ 93 %) Polyp-phenylensulfid mit hellbrauner Farbe und folgenden Kenndaten: Schmelzviskosität nm = 4,5 Pa.s (bei $\tau = 10^2$ Pa).

**Beispiel 2**

In einem 2-1-Dreihalskolben, der mit Thermometer, Rührer und Kolonne mit Destillatteiler ausgerüstet ist, werden unter Stickstoff 1110 g 1-Methyl-1-oxo-phospholan, 305,2 g Natriumsulfidhydrat (≙ 2,32 Mol) 341,1 g 1,4-Dichlorbenzol (≙ 2,32 Mol) vorgelegt. Das Umsetzungsgemisch wird langsam zum Sieden erhitzt. Aus dem destillierenden Azeotrop, bestehend aus Wasser und p-Dichlorbenzol, wird Wasser abgetrennt und p-Dichlorbenzol in das Reaktionsgefäß zurückgeführt. Nach 2 Stunden ist sowohl im Destillat als auch im Sumpf kein Wasser mehr nachweisbar. Es wird weitere 9 Stunden zum Rückfluß erhitzt und das Produkt in üblicher Weise isoliert. Man erhält 230,9 g weißes Polyarylensulfid (≙ 92,2 % Ausbeute, bezogen auf $Na_2S$, Schmelzviskosität von $\eta m$ = 3,9 Pa.s (bei $\tau = 10^2$ Pa.)).

**Beispiel 3**

Wie Beispiel 2, jedoch mit 1110 g N-Methylcaprolactam als Lösungsmittel. Man erhält 237,2 g weißes Polyarylensulfid (= 94,5 % Ausbeute, bezogen auf $Na_2S$ mit einer Schmelzviskosität von $\eta m$ = 13,5 Pa.s (bei $\tau = 10^2$ Pa.)).

**Beispiel 4**

Wie Beispiel 2, jedoch mit 1110 g N,N'-Dimethylpiperaazinon als Lösungsmittel. Man erhält 227,9 g Polyarylensulfid (≙ 90,8 % Ausbeute, bezogen auf $Na_2S$ mit einer Schmelzviskosität von $\eta m$ = 5,2 Pa.s (bei $\tau = 10^2$ Pa.s)).

**Beispiele 5 - 12**

10 g Polyarylensulfid wurden mit der angegebenen Menge S-Blüte versetzt und unter $N_2$-Atmosphäre und Rühren umgesetzt (Tabelle 1).

**Tabelle 1**

| Beispiel | Polyarylensulfid aus Beispiel | Gew.-% S | Temp. (°C) | Zeit (h) | $\eta m$ (Pa.s) |
|---|---|---|---|---|---|
| 5 | 1 | 0,5 | 360 | 1 | 520 |
| 6 | 2 | 0,5 | 360 | 1 | 750 |
| 7 | 3 | 0,5 | 360 | 1 | 1180 |
| 8 | 4 | 0,5 | 360 | 1 | 810 |
| 9 | 1 | 1,0 | 350 | 2 | 420 |
| 10 | 2 | 1,0 | 350 | 2 | 930 |
| 11 | 3 | 1,0 | 350 | 2 | 1070 |
| 12 | 4 | 1,0 | 350 | 2 | 790 |

**Beispiele 13 - 16**

10 g Polyarylensulfid wurden in einem Rohr vorgelegt und S-Dampf mittels eines $N_2$-Stromes aufsublimiert. Anschließend wurde unter Rühren und $N_2$-Atmosphäre aufgeschmolzen (Tabelle 2).

**Tabelle 2**

| Beispiel | Polyarylensulfid aus Beispiel | Gew.-% S | Temp. (°C) | Zeit (h) | ηm (Pa.s) |
|---|---|---|---|---|---|
| 13 | 1 | 0,5 | 360 | 1 | 830 |
| 14 | 2 | 0,5 | 360 | 1 | 930 |
| 15 | 3 | 0,5 | 360 | 1 | 1410 |
| 16 | 4 | 0,5 | 360 | 1 | 1020 |

**Beispiele 17 - 20**

10 g Polyarylensulfid werden mit einer Lösung aus Aceton mit 0,5 Gew.-% S, bezogen auf Polyarylensulfid, verrührt und das Lösungsmittel abgedampft. Anschließend wird die Mischung 1 Stunde bei 360° C unter Rühren und $N_2$-Atmosphäre gerührt (Tabelle 3).

**Tabelle 3**

| Beispiel | Polyarylensulfid aus Beispiel | ηm (Pa.s) |
|---|---|---|
| 17 | 1 | 770 |
| 18 | 2 | 920 |
| 19 | 3 | 1320 |
| 20 | 4 | 790 |

**Patentansprüche**

1. Zweistufiges Verfahren zur Herstellung von hochmolekularen Polyarylensulfiden aus niedermolekularen, gegebenenfalls verzweigten Polyarylensulfiden die in eines ersten Stufe aus

a. 50 - 100 Mol-% Dihalogenaromaten der Formel

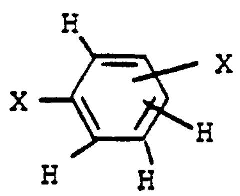

(I)

und 0 - 50 Mol-% Dihalogenaromaten der Formel

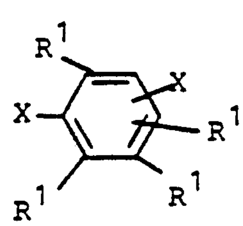

(II),

wobei

X für zueinander meta- oder para-ständiges Halogen steht und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$- Alkylaryl oder $C_7$-$C_{24}$-Aralkyl bedeuten und weiterhin zwei zueinander orthoständige Reste $R^1$ einen ankondensierten aromatischen Ring mit insgesamt 6 C-Atomen oder einen ankondensierten heterocyclischen Ring mit 5 - 6 Ringatomen und 1 - 3 Heteroatomen wie N, O und S bilden können,

b. 0 - 0,5 Mol-%, bevorzugt 0,0 - 0,1 Mol-%, bezogen auf die Summe der Dihalogenaromaten der Formel I

und II, eines Tri- oder Tetrahalogenaromaten der Formel

$ArX_n$, (III),

wobei

Ar ein aromatischer oder heterocyclischer Rest ist,

X für Halogen wie Chlor oder Brom steht und

n für die Zahl 3 oder 4 steht, und

c. Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- oder Kaliumhydroxid, wobei das molare Verhältnis (a + b) : c im Bereich von 0,75 : 1 bis 1,05 : 1, bevorzugt 0,9 - 1 bis 1,00 : 1, liegen kann, in

d. einem organischen Lösungsmittel, gegebenenfalls unter Zusatz von

e. 0,02 - 1 Mol Katalysatoren pro Mol Alkalisulfid oder Cosolventien hergstellt werden und eine Schmelzviskosität von 0,1 bis 50 Pa.s heben

und

in einer zweiten Stufe

f. mit elementarem Schwefel umgesetzt werden, dadurch gekennzeichnet, daß die Umsetzung mit 0,1 - 1,5 Gew.-% Schwefel, bezogen auf Polyarylensulfid in der Schmelze bei Temperaturen von 300 - 390°C erfolgt.

2. Verfahren nach Anspruch 1, dadurch gekennzeichnet, daß 0,15 - 1,05 Gew.-% Schwefel, bezogen auf Polyarylensulfid, eingesetzt werden.

3. Verfahren nach den Ansprüchen 1 und 2, dadurch gekennzeichnet, daß der Schwefel in Lösung auf das Polyarylensulfid aufgebracht und das Lösungsmittel vor der Reaktion abgedampft wird.

4. Verfahren nach den Ansprüchen 1 und 2, dadurch gekennzeichnet, daß der Schwefel aufsublimiert wird.

5. Verfahren nach Ansprüchen 1 - 4, dadurch gekennzeichnet, daß bei Temperaturen von 340 - 370°C gearbeitet wird.

6. Verfahren nach Anspruch 1, dadurch gekennzeichnet, daß Schwefelsuspensionen eingesetzt werden.

## Claims

1. A two-stage process for the production of high molecular weight polyarylene sulfides from low molecular weight, optionally branched polyarylene sulfides which, in a first stage, are prepared from

a. 50 to 100 mol-% aromatic dihalogen compounds corresponding to the following formula

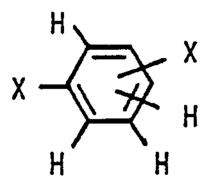

(I)

and 0 to 50 mol-% -aromatic dihalogen compounds corresponding to the following formula

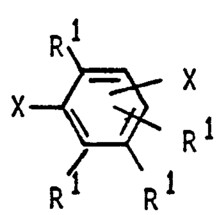

(II)

in which

X represents halogen in the meta- or para-position to one another and

$R^1$ may be the same or different and represent hydrogen, $C_1$-$C_{20}$ alkyl, $C_5$-$C_{20}$ cycloalkyl, $C_6$-$C_{24}$ aryl, $C_7$-$C_{24}$ alkylaryl or $C_7$-$C_{24}$ aralkyl, in addition to which two substituents $R^1$ in the ortho position to one another may form a fused aromatic ring containing a total of 6 carbon atoms or a fused heterocyclic ring containing 5 to 6 ring atoms and 1 to 3 hetero atoms, such as N, O and S,

and

0 to 0.5 mol-% and preferably 0.0 to 0.1 mol-%, based on the sum of the aromatic dihalogen compounds of formulae I and II, of an aromatic tri- or tetrahalogen compound corresponding to the following formula

$ArX_n$, (III)

in which

Ar is an aromatic or heterocyclic radical, X represents halogen, such as chlorine or bromine and n is the number 3 or 4,

and

c. alkali sulfides, preferably sodium or potassium sulfide or mixtures thereof, preferably in the form of their hydrates or aqueous mixtures, optionally together with alkali hydroxides, such as sodium or potassium hydroxide, the molar ratio of (a+b) : c being from 0.75 : 1 to 1.05 : 1 and preferably from 0.9 - 1 to 1.00 : 1, in

d. an organic solvent, optionally with addition of

e. 0.02 to 1 mol catalysts per mol alkali sulfide or cosolvents,

and have a melt viscosity of 0.1 to 50 Pa.s and, in a second stage, are reacted

f. with elemental sulfur, characterized in that the reaction takes place with 0.1 to 1.5 % by weight sulfur, based on polyarylene sulfide, in the melt at temperatures of 300 to 390° C.

2. A process as claimed in claim 1, characterized in that 0.15 to 1.05 % by weight sulfur, based on polyarylene sulfide, is used.

3. A process as claimed in claims 1 and 2, characterized in that the sulfur is applied in solution to the polyarylene sulfide and the solvent is evaporated off before the reaction.

4. A process as claimed in claims 1 and 2, characterized in that the sulfur is applied by sublimation.

5. A process as claimed in claims 1 to 4, characterized in that it is carried out at temperatures of 340 to 370° C.

6. A process as claimed in claim 1, characterized in that sulfur suspensions are used.

**Revendications**

1. Procédé à deux phases pour la production de polyarylènesulfures de haut poids moléculaire à partir de polyarylènesulfures de bas poids moléculaire, éventuellement ramifiés, qui sont préparés à partir :

a. de 50 à 100 moles % d'hydrocarbures aromatiques dihalogénés de formule

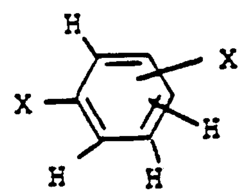

(I)

et de 0 à 50 moles % d'hydrocarbures aromatiques dihalogénés de formule

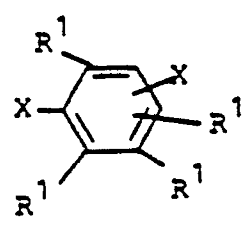

(II),

formules dans lesquelles:

X represente des halogènes en position méta ou para, l'un par rapport à l'autre, tels que le chlore ou le brome, et

les groupes $R^1$, identiques ou différents, représentent de l'hydrogène et un groupe alkyle en $C_1$ à $C_{20}$, cycloalkyle en $C_5$ à $C_{20}$, aryle en $C_6$ à $C_{24}$, alkylaryle en $C_7$ à $C_{24}$ ou aralkyle en $C_7$ à $C_{24}$, et en outre, deux restes $R^1$ en position ortho l'un par rapport à l'autre peuvent former un noyau aromatique condensé avec au total six atomes de carbone ou un noyau hétérocyclique condensé avec cinq ou six atomes cycliques et un à trois hétéroatomes tels que N, O et S,

b. de 0 à 0,5 mole %, de préférence 0,0 à 0,1 mole %, par rapport à la somme des hydrocarbures aromatiques dihalogénés de formules I et II, d'un hydrocarbure aromatique trihalogéné ou tétrahalogéné de formule

$ArX_n$, (III)

dans laquelle:

Ar est un reste aromatique ou hétérocyclique, X désigne un halogène tel que le chlore ou le brome et n représente le nombre 3 ou 4, et

c. de sulfures alcalins, de préférence de sulfure de sodium ou de potassium ou de leur mélange, de préférence sous la forme de leurs hydrates ou de mélanges aqueux, le cas échéant conjointement avec des hydroxydes alcalins tels que l'hydroxyde de sodium ou l'hydroxyde de potassium, le rapport molaire (a + b) : c pouvant se situer dans l'intervalle de 0,75 : 1 à 1,05 : 1, de préférence de 0,9 : 1 à 1 : 1, dans

d. un solvant organique, le cas échéant avec addition de

e. 0,02 à 1 mole de catalyseurs par mole de sulfure alcalin ou de cosolvants, et qui ont une viscosité à l'état fondu de 0,1 à 50 Pa.s,

et

dans une seconde étape

f. que l'on fait réagir avec du soufre élémentaire,

caractérisé en ce que la réaction est conduite avec 0,1 à 1,5 % en poids de soufre, par rapport au polyarylensulfure, à l'état fondu, à des températures de 300 à 390° C.

2. Procédé suivant la revendication 1, caractérisé en ce qu'on utilise 0,15 à 1,05 % en poids de soufre par rapport au polyarylènesulfure.

3. Procédé suivant les revendications 1 et 2, caractérisé en ce que le soufre est appliqué en solution sur le polyarylènesulfure et le solvant est chassé par évaporation avant la réaction.

4. Procedé suivant les revendications 1 et 2, caractérisé en ce que le soufre est sublimé.

5. Procédé suivant les revendications 1 à 4, caractérisé en ce qu'on opère à des températures de 340 à 370° C.

6. Procédé suivant la revendication 1, caractérisé en ce qu'on utilise des suspensions de soufre.